# EUROPÄISCHE PATENTSCHRIFT

(11) **EP 2 063 805 B1**
(45) Veröffentlichungstag und Bekanntmachung des Hinweises auf die Patenterteilung: **27.07.2011**
(21) Anmeldenummer: 07763936.7
(22) Anmeldetag: 06.07.2007
(51) Int. Cl.: A61C 13/265, A61C 13/275

(54) **STEGMATRIZE**
SPIDER DIE
MATRICE À ÉTAIS

(30) Priorität: 21.09.2006 CH 15072006; 04.04.2007 CH 5402007
(43) Veröffentlichungstag der Anmeldung: 03.06.2009
(73) Patentinhaber: Peter Sprenger Dental Technik, 8003 Zürich (CH)
(72) Erfinder: SPRENGER, Peter, 78247 Hilzingen (DE)
(74) Vertreter: Feldmann, Clarence Paul
(86) Internationale Anmeldenummer: PCT/CH2007/000329
(87) Internationale Veröffentlichungsnummer: WO 2008/034267

(56) Entgegenhaltungen:
- DE-A1- 3 009 758
- DE-A1- 3 839 112
- DE-U- 29 609 304
- DE-U1-202005 006 941
- US-A- 4 209 904
- US-A1- 2003 211 444

## Beschreibung

Die vorliegende Erfindung betrifft eine Stegmatrize zur Befestigung einer dentalprothetischen Suprakonstruktion auf einer Stegpatrize, gemäss Oberbegriff des Patentanspruches 1.

Stegmatrizen sind Teil eines Stegattachments mit denen Teil- oder Totalprothesen implantatretiniert im Unter- oder Oberkiefer gehalten werden. Solche Stegattachments bestehen aus einer Stegpatrize und einer Stegmatrize. Die Stegpatrize ist ein feinmechanisches Verankerungselement, welches einen Balken umfasst, welcher zwischen Implantaten verläuft und diese miteinander oral verblockt. Der gesamte Balken mit den Befestigungsmitteln zur Befestigung an den Implantaten wird als Stegpatrize bezeichnet.

In den abnehmbaren Teil der Zahnprothese ist eine Stegmatrize integriert. Die Stegmatrize, oftmals auch Stegreiter genannt, besteht aus einer Hülse, die mit entsprechenden Retentionselementen versehen ist, um eine Verankerung in der dentalprothetischen Suprakonstruktion zu bewirken.

Bei modernen Suprakonstruktionen soll eine metallene Tragkonstruktion vorhanden sein auf der die eigentliche Suprakonstruktion aus Kunststoff gehalten wird. Die Tragkonstruktion wird Modellguss genannt. Zur Verbindung des Modellgusses mit dem Kunststoffaufbau weist der Modellguss Durchbrüche auf, die als sogenannte Polymerisationsfenster bezeichnet werden.

Während die Entwicklung, die oft von Zahnärzten gemacht wird, sich im Wesentlichen auf die lösbare Verbindung zwischen Stegmatrize und Stegpatrize beschäftigt hat, wurde das Problem der Verankerung der Stegmatrize in der dentalprothetischen Suprakonstruktion vernachlässigt, da dieses Problem im Wesentlichen nur in den Dentallabors vorkommt, die sich mit der Herstellung der dentalprothetischen Suprakonstruktion beschäftigen. Gerade bei der Fertigung der dentalprothetischen Suprakonstruktion hat es sich jedoch erwiesen, dass die Retentionselemente an der Hülse der Stegmatrize eine ungenügende Retentionskraft aufzunehmen vermögen, da die Retentionselemente konstruktionsbedingt nur äusserst klein gehalten werden konnten. Die heute üblichen Konstruktionen der Stegmatrizen sehen eine im Querschnitt mindestens annähernd u-förmige Hülse vor, die praktisch entlang der Scheitellinie je eine buccal und eine lingual verlaufende Längsfläche aufweisen, die eine maximale Ausdehnung in lingualer beziehungsweise buccaler Richtung aufweisen, so dass sie die Hülsenbreite nicht überschreiten. Dies ist auch erforderlich, da ansonsten die Wandstärke der dentalprothetischen Suprakonstruktion beziehungsweise des Zahnaufbaues zu dünnwandig werden würde oder aus dieser herausragen würde.

Das Stegattachment ist eine Entwicklung von Dr. Hans Dolder und stellt eine Lösung dar, zur Halterung von Dentalprothesen, die nicht nur rein gingival abgestützt sind. Wie bereits erwähnt hat sich der Doldersteg über viele Jahre hinweg bewährt. Eine Weiterentwicklung des Doldersteges zeigt beispielsweise die EP 1 192 916 bei der die Befestigung der Matrize auf den als Steg funktionierenden Patrize nicht mit einer resilienten mechanischen Halterung funktioniert, sondern mit einem formlich auf den Steg angepassten Permanentmagnet der mit einer Hülse umgeben ist. Auch bei dieser Lösung sind Retenttionselemente lingual und buccal angeformt, die die Form einer länglichen seitlich angeformten Nase bilden. Auch hier ist wiederum die Verankerung der dentalprothetischen Suprakonstruktion nur rudimentär realisiert.

Aus der DE-3009758A ist eine Stegmatrize bekannt, die aus einer Hülse mit daran angeformten in occlusaler Richtung verlaufende Stifte besteht. Die damit erzielbaren Retentionskräfte sind minimal.

Herkömmlich ist hingegen die Lösung gemäss der DE-29609304 U, bei der die Stegmatrize als Hülse mit buccal und lingual angeformten Flügeln gebildet ist.

Absolut ungewöhnlich ist eine Stegpatrize, die praktisch am Patient angeformt wird und entsprechend auch die Stegmatrize als eine U-förmige, im Querschnitt rechtwinklige Hülse geformt ist und Matrize und Patrize miteinander geformt werden. Die Lösung gemäss der US-2003/0211 444 ist somit nicht mit einem Doldersteg kombinierbar.

Letztlich ist aus der US-4209 904 eine Stegmatrize bekannt, die aus einer Anzahl von auf dem Doldersteg aufsetzbaren Reitern gebildet wird, wobei die Reiter einen Hülsenabschnitt aufweisen, an dem ein in occlusaler Richtung aufgebogener Lappen angeformt ist. Die Lösung ist an sich nur für Suprakonstruktionen ohne Modellguss, also ohne Metallverstärkung geeignet. Befindet sich der Lappen an einer Stelle wo die Pallatinalfläche der Zähne sehr nahe beim Steg verläuft, so muss der Retentionslappen abgeschliffen werden, und der Halt ist stark geschwächt.

Es ist folglich die Aufgabe der vorliegenden Erfindung eine Stegmatrize der eingangs genannten Art derart zu verbessern, dass die Retentionskräfte von der Stegmatrize zur dentalprothetischen Suprakonstruktion erhöht werden können ohne dabei die darauf angebrachte dentalprothetische Suprakonstruktion zu schwächen oder andere Nachteile des Standes der Technik in Kauf nehmen zu müssen.

Diese Aufgabe löst eine Stegmatrize gemäss Oberbegriff des Patentanspruches 1. Die durchgehende Gestalt der Retentionselemente erlaubt dem Zahntechniker an beliebiger Stelle das Retentionselement durch Schleifen den Gegebenheiten anzupassen ohne dass die Hülse Schaden nimmt, eine Schwächung der Konstruktion auftritt oder andere negative Effekte auftreten.

In den meisten Fällen steht in occlusaler Richtung dem Dentallaboranten, der eine dentalprothetische Suprakonstruktion anfertigt, wesentlich mehr Raum zur Verfügung. Da die bei der Benutzung auftretenden Kräfte im Wesentlichen occlusal wirken, ist es jedoch erforderlich, dass die Retentionselemente beziehungsweise das mindestens eine Retentionselement in von der occlusalen Richtung abweichend, hinterschnitten ist.

In der Zeichnung sind die bevorzugten Ausführungsformen des Erfindungsgegenstandes vereinfacht dargestellt und anhand der nachfolgenden Beschreibung erläutert.

Es zeigt:
- Figur 1: die Ansicht eines an zwei Implantate befestigten Dolderstegs in perspektivischer Darstellung
- Figur 2: stellt einen Schnitt durch eine erste Ausführungsform einer Stegmatrize senkrecht zu dessen Längsausrichtung dar, während
- Figur 3: dieselbe Darstellung einer zweiten Ausführungsform zeigt.

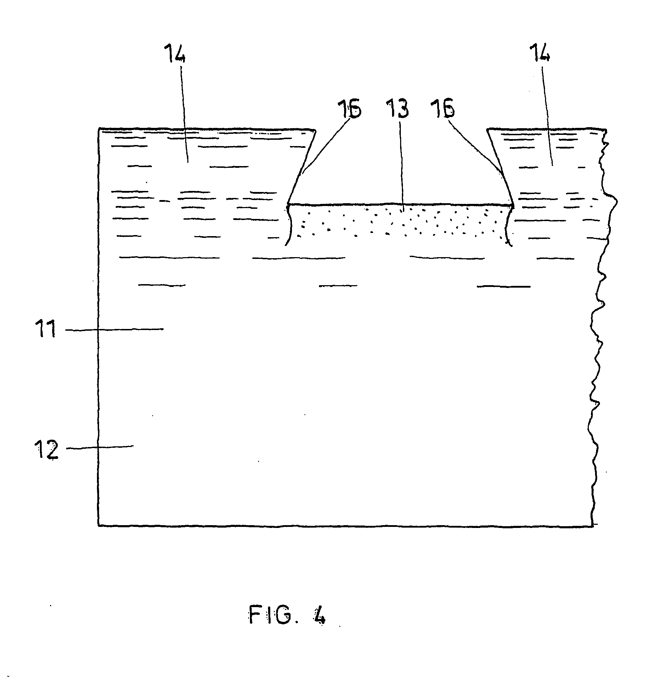

- Figur 4: zeigt eine Teilansicht einer Stegmatrize von der Seite, die auf eine besondere Art verwendet wird. Schliesslich zeigt
- Figur 5: eine besonders bevorzugte Ausführungsform einer Stegmatrize mit einer anders gestalteten Querschnittsform in Seitenansicht und
- Figur 6: in einer perspektivischen Darstellung. In
- Figur 7: ist eine Stegmatrize der herkömmlichen Art in kleinerem Massstab gezeigt.

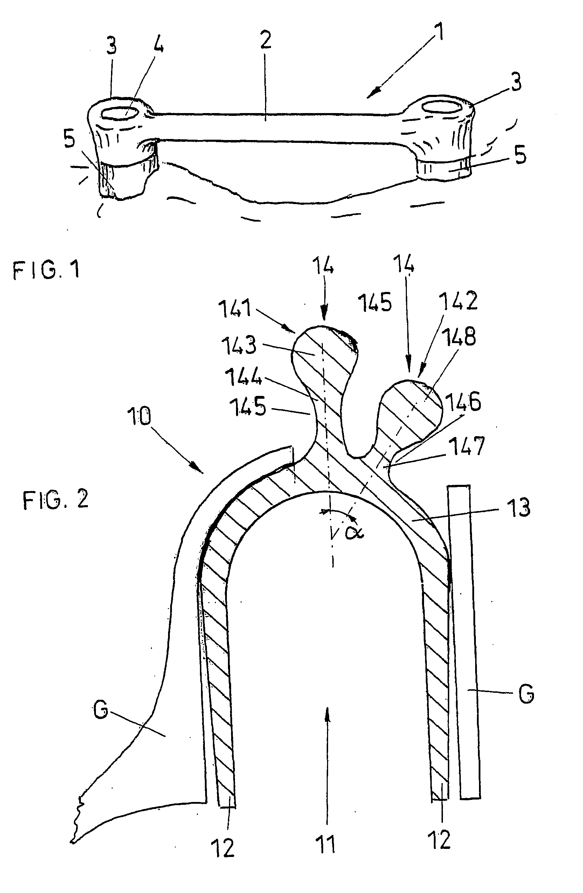

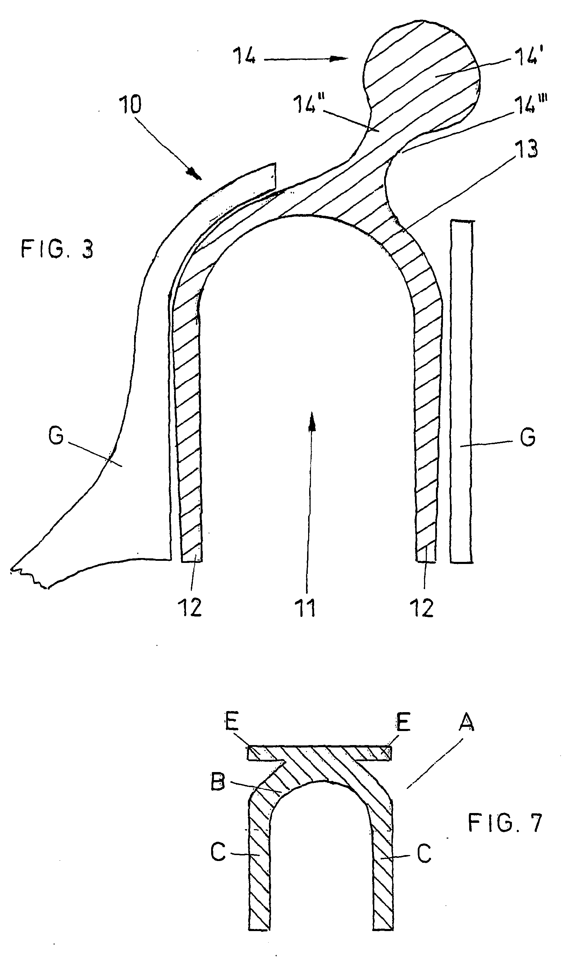

Vorerst wird nun auf die Figur 7 eingegangen, in der eine herkömmliche Stegmatrize im Querschnitt dargestellt ist. Die Stegmatrize bildet den klemmenden Teil mit dem eine Ganz- oder Teilprothese auf einer Stegpatrize resilient gehalten wird. Im eingesetzten Zustand deckt somit die Teil- oder Ganzprothese den Doldersteg, gemäss Figur 1, vollständig ab. Die Länge der Stegmatrize entspricht dabei maximal der Länge des Balkens oder Steges 2. Die eigentliche Stegmatrize ist hier mit A bezeichnet. Sie besteht aus einer länglichen im Querschnitt bogenförmigen Hülse B. Diese Hülse wird oft auch als Reiterhülse bezeichnet, da sie entsprechend, wie erwähnt, auf dem Balken 2 einer Stegpatrize 1 aufgesetzt wird. Die Reiterhülse B wird in Längsrichtung beidseitig von Klemmwänden C begrenzt. Diese gehen in einen Lagerbogen über. Im Bereiche des Lagerbogens sind Retentionselemente E angeformt. Der Verlauf dieser Retentionselemente ist exakt buccal-lingual verlaufend. Da die aufzunehmenden Kräfte der dentalprothetischen Suprakonstruktion im Wesentlichen in occlusaler Richtung verlaufen, ist an sich nicht zu sehr die Richtung als vielmehr die Grösse der Retentionselemente von Bedeutung. Bei der bisherigen Ausgestaltung war eine Vergrösserung der Retentionselemente nicht möglich, da sie über die Weite der beiden Klemmwände hinaus führen würde.

In der Figur 2 ist eine bevorzugte Ausführungsform der erfindungsgemässen Matrize in einem Querschnitt längs zur Ausrichtung der Stegmatrize dargestellt. Die Stegmatrize ist insgesamt mit 10 bezeichnet. Sie umfasst die Hülse beziehungsweise Reiterhülse 11, die auch hier wiederum zwei längs verlaufende, in etwa parallel angeordnete, Klemmwände 12 besitzt. Die beiden Klemmwände 12 gehen auch hier wiederum in einen Lagerbogen 13 über. Auf dem Lagerbogen 13 muss mindestens ein Retentionselement 14 vorhanden sein, welches im Wesentlichen in occlusaler Richtung ausgerichtet ist. Dabei muss die Formgebung des Retentionselementes 14 so sein, dass mindestens ein von der occlusalen Richtung abweichender Hinterschnitt entsteht. Da bei den Kaubewegungen auf die dentale Suprakonstruktion nicht nur Kräfte in occlusaler Richtung auftreten, sondern auch von dieser abweichende, im Wesentlichen in buccaler oder lingualer Richtung wirkende Kraftkomponenten hinzukommen, ist die im Wesentlichen in occlusaler Richtung verlaufende Anordnung des mindestens einen Retentionselementes 14 besonders vorteilhaft, da auch diese Kraftkomponenten in optimaler Weise aufgefangen werden können.

In der Ausführungsform gemäss der Figur 2 sind zwei Retentionselemente dargestellt. Ein erstes Retentionselement ist praktisch nur in occlusaler Richtung ausgerichtet und ist mit 141 bezeichnet. Dieses erste Retentionselement 141 verläuft über die gesamte Länge der Stegmatrize 10 beziehungsweise über die gesamte Länge der Hülse 11 Sie hat im Wesentlichen eine Querschnittform, die einen Kopf 143. bildet, die an einem Hals 144 mit dem Lagerbogen 13 einstückig verbunden ist. Dank dem Hals 144 des ersten Retentionselementes entstehen beidseitig Hinterschnitte 145 die im Wesentlichen in occlusaler Richtung auftretende Kräfte formschlüssig aufzunehmen vermögen. Um jedoch die Verankerung des hierüber aufzutragenden Gussmaterials der dentalprothetischen Suprakonstruktion besser zu verankern, wird zusätzlich in dieser bevorzugten Ausführungsform ein zweites Retentionselement 142 vorgesehen, welches gegenüber dem ersten Retentionselement in einem Winkel α dazu geneigt angeformt ist. Dieses zweite Retentionselement ist in gleicher Weise parallel zur Längsrichtung der Stegmatrize 10 verlaufend und ebenso parallel zum ersten Retentionselement 141. Dank dieser geneigten Form ergibt sich hier ein noch mal stärkerer Hinterschnitt 146 unter dem zweiten Retentionselement 142.

Die gesamte Hülse 11 ist ein vorgefertigtes Element, welches die Dentallabors einkaufen und weiter bearbeiten indem sie die Hülse 11 in einem Modellguss G einbauen, und darüber werden die Prothesezähne geformt. Die Retentionselemente 14 ragen durch den Modellguss G hindurch und dienen, wie erwähnt, der formschlüssigen Halterung der dentalprothetischen Suprakonstruktion. Hierbei verbleibt zwischen den Klemmwänden 12 der Hülse 11 und dem Modellguss G ein Spalt, der eine gewisse Federbewegung der Klemmwände 12 zulässt.

Die durchgehende Gestalt der Retentionselemente erlaubt dem Zahntechniker an beliebiger Stelle das Retentionselement durch Schleifen den Gegebenheiten anzupassen ohne dass die Hülse Schaden nimmt, eine Schwächung der Konstruktion auftritt oder andere negative Effekte auftreten.

In der Figur 3 ist eine zweite bevorzugte Ausführungsform des Erfindungsgegenstandes in gleicher Darstellung wie Figur 2 gezeigt. Wiederum ist die Stegmatrize 10 bestehend aus der Hülse 11 eingebettet im Modellguss G dargestellt, und die Hülse 11 besitzt wiederum Klemmwände 12, die parallel zueinander verlaufen und deren Wandstärke, gleich wie bei der Ausführung gemäss Figur 2, vom Lagerbogen 13 zu den Enden hin in geringem Masse konisch zulaufen um damit die Federwirkung der Klemmwände 12 zu erhöhen. Am Lagerbogen 13 ist diesmal ein einziges Retentionselement 14 angeformt. Dieses einzige Retentionselement 14 erstreckt sich wiederum über die gesamte Länge der Hülse 11 und besitzt auch hier einen Kopf 14' und einen Hals 14". Im Wesentlichen ist das Retentionselement 14 in occlusaler Richtung ausgerichtet, hat aber wie in der Ausführung zuvor bezüglich des zweiten Retentionselementes 142 eine Neigung in buccaler oder lingualer Richtung. Die Neigung in buccaler oder lingualer Richtung ist von der Einbaulage abhängig und wird vom Dentallabor bestimmt. Üblicherweise wird die Einbaulage jedoch so sein, dass das Retentionselement 14 im eingebauten Zustand eher buccal nach aussen gerichtet eingebaut wird. Ist ein einziges Retentionselement vorhanden, so kann dieses selbstverständlich grösser ausgestaltet sein als bei der Variante bei der zwei Retentionselemente in gleicher Weise parallel verlaufend vorhanden sind. Die Neigung dient im Wesentlichen dazu einen vergrösserten Hinterschnitt 14"' zu realisieren. Die Neigung des Retentionselementes wird üblicherweise zwischen 0° und 45 ° betragen, bevorzugter weise jedoch zwischen 10° und 30 ° gewählt. Sind jedoch zwei Retentionselemente vorhanden, wie in der zuvor beschriebenen Ausführungsform, so können selbstverständlich beide Retentionselemente, das eine mit einer buccalen und das andere mit einer lingualen Neigung, versehen sein oder auch nur eines der beiden eine Neigung aufweisen. Je nach dem ist selbstverständlich auch der Winkel α in einem grossen Mass variabel. Maximal beträgt er jedoch bevorzugterweise nicht mehr als 90 ° und vorzugsweise beträgt der Winkel α zwischen 10 und 45 °. Gerade bei der Ausgestaltung der Lösung mit zwei in Längsrichtung verlaufenden Retentionselementen, wie in der Figur 2 dargestellt, wird man die Länge der Verbindungshälse 144 und 147 unterschiedlich lang machen um dadurch die Köpfe der Retentionselemente genügend gross gestalten zu können und gleichzeitig ein einwandfreies Einfliessen der Masse zur Bildung der dentalprothetischen Suprakonstruktion sicher zu stellen.

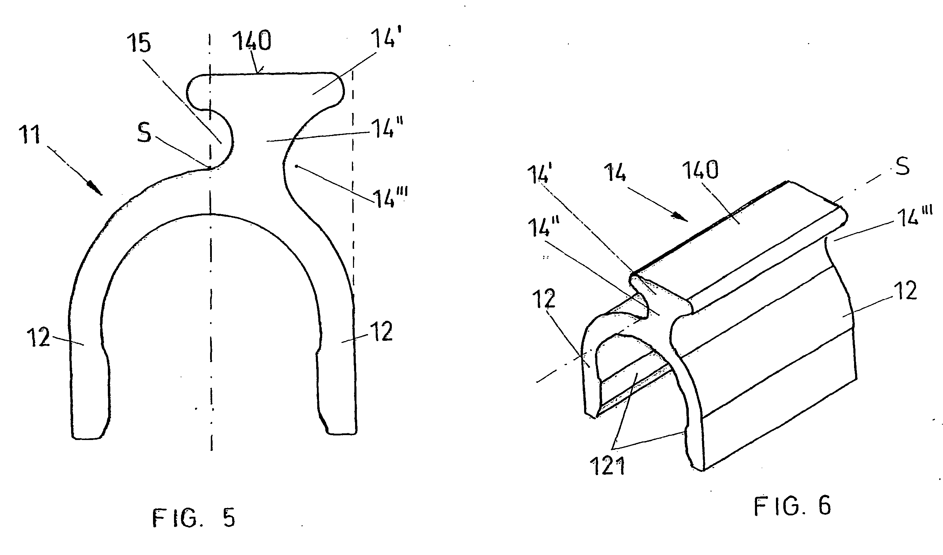

Der Dentallaborant kann sowohl bei der Ausführung nach der Figur 2 als auch bei de Ausführung nach Figur 3 selber noch weitere Massnahmen treffen um die Retention zu erhöhen und gleichzeitig auch um gewisse formliche Anpassungen im Verlauf der Hülse vorzunehmen. Dies ist symbolisch in der Figur 6 dargestellt in der eine Hülse 11 mit einem einzigen Retentionselement 14 von der Seite gezeigt ist. Das Retentionselement ist hier durch entsprechendes Einsägen, Wegfräsen oder Feilen so unterbrochen, dass dieses mit Unterschnitt durchtrennt ist. Diese Verwendung bei der die Hinterschnittkanten distal und mesial geneigt verlaufend geformt sind, geht von Hülsen mit durchgehend über deren gesamte Länge sich erstreckenden Retentionselementen aus. Stellt man die Hülse 11 in einem Formgussverfahren her, so könnten die Hinterschnittkanten 16 am Retentionselement 14 auch direkt von Anfang an eingeformt sein. Da aber das Dentallabor im Normalfall ohnehin Anpassungen vornehmen kann, wird eine Lösung bei der das Dentallabor selbst die Hinterschnittkanten anbringt bevorzugt.

In den Figuren 5 und 6 ist eine bevorzugte Ausführungsform der Stegmatrize 10 dargestellt. Diese hat wiederum eine durchgehende, der Länge der Stegpatrize angepasste Ausdehnung. Die Hülse 11 besteht auch hier aus zwei Klemmwänden 12, die über dem Lagerbogen 13 miteinander verbunden sind. Zur Erhöhung der Haltekraft der Hülse 11 aus dem Steg 2 sind die Klemmwände 12 mit an deren Innenseite angebrachten stufenförmigen Verdickungen, den Klemmstreifen 121 versehen.

Die Hülse 11 ist bezüglich der Längsachse beziehungsweise bezüglich der Scheitellinie S des Lagerbogens spiegelsymmetrisch. Exzentrisch zu dieser Scheitellinie S ist der Hals 14" des hier einzigen Retentionselementes 14 angeformt. Der Hals 14" stellt die Verbindung zum Kopf 14' des Retentionselementes 14 dar. Dieser Kopf hat eine gegenüber den früher beschriebenen Beispielen eine andere Querschnittsform. Prinzipiell kann die Querschnittsform des Kopfes 14' eine beliebige Form aufweisen.

In der hier dargestellten Form hat der Kopf eine quer zur Längsrichtung verlaufende Verbreiterung, die somit in der buccal-lingual Richtung verläuft. Auffällig ist hier eine Abplattung 140 des Kopfes 14'. Diese Abplattung 140 wird bevorzugte, um eine Kerbwirkung unter den in occlusaler Richtung auftretenden Kräften in der Suprakonstruktion zu vermeiden. Bevorzugterweise verläuft diese Abplattung senkrecht zur occlusalen Richtung.

Die exzentrische Ausrichtung des Halses 14" des Retentionselementes 14 hängt mit dem unterschiedlichen Verlauf der Pallatinalflächen der Zähne zusammen. Die exzentrische Anordnung des Kopfes 14' soll jedoch so sein, dass der Kopf die Verlängerung die Klemmwände auf keiner Seite überragt. Die äusseren, buccalen Zahnflächen verlaufen eher senkrecht, während palatinal die Zahnflächen zur buccalen Richtung hin geneigt verlaufen. Somit ist in der Einbaulage das Retentionselement 14 von der palatinalen Seite weg versetzt angeordnet. In der Figur 5 würde sich somit die Palatinalfläche links befinden.

Diese Anordnung führt auch dazu, dass der Hinterschnitt zwischen Hülse und Kopf 14' auf der einen Seite normalerweise der buccalen Seite geringer als auf der palatinalen Seite ist, wo man meist mehr Platz hat.

Die erfindungsgemässe Stegmatrize erlaubt eine auch bei geringen Platzverhältnissen bestmögliche Raumnutzung mit optimaler Verankerung, dank ihrer speziellen Formgebung, die auf jede Suprakonstruktion korrekt anpassbar ist.

### Bezugszeichenliste:

- 1: Stegpatrize
- 2: Balken oder Stege
- 3: Befestigungsköpfe
- 4: Schraubenloch
- 5: Implantat
- A: Stegmatrize
- B: Hülse oder Reiterhülse
- C: Klemmwände
- D: Lagerbogen
- E: Retentionselement
- G: Modellguss
- S: Scheitellinie der Hülse
- 10: Stegmatrize
- 11: Hülse
- 12: Klemmwände
- 13: Lagerbogen
- 14: Retentionselement
- 14': Kopf des einzigen Retentionselementes
- 14": Hals des einzigen Retentionselementes
- 14"': Hinterschnitt
- 15: Hinterschnitt, palatinalseitig
- 16: Hinterschnittkanten
- 121: Klemmstreifen
- 140: Abplattung
- 141: erstes Retentionselement
- 142: zweites Retentionselement
- 143: Kopf des ersten Retentionselementes
- 144: Hals des ersten Retentionselementes
- 145: Hinterschnitt des ersten Retentionselementes
- 146: Hinterschnitt des zweiten Retentionselementes
- 147: Hals des zweiten Retentionselementes
- 148: Kopf des zweiten Retentionselementes

## Patentansprüche

1. Stegmatrize (10) zur Befestigung einer dentalprothetischen Suprakonstruktion auf einer Stegpatrize (1), wobei die Stegmatrize eine im Querschnitt mindestens annähernd U-förmig gebogene, auf die Stegpatrize anbringbare Hülse (11) umfasst, auf der mindestens ein Retentionselement (14) zur Halterung der dentalprothetischen Suprakonstruktion angeordnet ist, wobei das mindestens eine Retentionselement (14, 14', 14"; 141; 142)ein an der Hülle angeformtes Teil mit im wesentlichen occlusaler Ausrichtung ist, **dadurch gekennzeichnet, dass** das mindestens eine Retentionselement (14; 14', 142,) sich über die gesamte Länge der Hülse (11) erstreckt und im Querschnitt die Form eines Kopfes (14'; 143, 148) mit Verbindungshals ( 14"; 144, 147) aufweist, so dass der Verbindungshals beidseitig einen Retentionshinterschnitt (14"'; 145, 146) bildet und wobei der Verbindungshals der mindestens einen Retentionselementes zur Scheitellinie der Hülse versetzt angeformt ist.

2. Stegmatrize nach Anspruch, **dadurch gekennzeichnet, dass** das mindestens eine Retentionselement (14; 142) zusätzlich eine von der occlusalen Richtung abweichende buccale oder linguale Neigung aufweist.

3. Stegmatrize nach Anspruch 2, **dadurch gekennzeichnet, dass** die Neigung des mindestens einen Retentionselements (14; 142) in Abweichung von der occlusalen Richtung, zwischen 0° und 45°, vorzugsweise zwischen 10° und 30° beträgt.

4. Stegmatrize nach Anspruch 1, **dadurch gekennzeichnet, dass** diese zwei parallele, über die gesamte Länge der Hülse (11) sich erstreckende Retentionselemente (141, 142) aufweist, die beide im Wesentlichen eine occlusale Ausrichtung haben und untereinander einen Winkel (α) einschliessen.

5. Stegmatrize nach Anspruch 4, **dadurch gekennzeichnet, dass** der Winkel (α), den die beiden Retentionselemente (141, 142) untereinander einschliessen, maximal 90° beträgt, wobei dieser Winkel vorzugsweise zwischen 10° und 45° beträgt.

6. Stegmatrize nach Anspruch 4, **dadurch gekennzeichnet, dass** beide Retentionselemente (141, 142) im Querschnitt die Form eines Kopfes (143, 148) mit Verbindungshals (144, 147) aufweisen.

7. Stegmatrize nach Anspruch 6, **dadurch gekennzeichnet, dass** die Länge der Verbindungshälse (144, 147) unterschiedlich ist.

8. Stegmatrize nach Anspruch 1, **dadurch gekennzeichnet dass** der Kopf des Stegelementes eine über die gesamte Länge sich erstreckende Abplattung aufweist.

9. Stegmatrize nach Anspruch 8, **dadurch gekennzeichnet dass** die Abplattung senkrecht zur Okklusionsrichtung verläuft.

10. Stegmatrize (10) nach einem der Ansprüche 1-9, **dadurch gekennzeichnet, dass** das sich über die gesamte Länge der Hülse (11) erstreckenden mindestens eine Retentionselement (14; 141, 142) an einer oder mehreren Stellen mit Hinterschnittkanten (16) quer zur Längsrichtung des Retentionselementes versehen ist.

## Claims

1. A bar matrix (10) for fastening a denture superstructure to a bar abutment (1), wherein the bar matrix comprises a sleeve (11) which can be attached to the bar abutment and comprises an almost U-shaped bent cross section on which at least one retaining element (14) is arranged to hold the denture superstructure, wherein the at least one retaining element (14, 14', 14"; 141; 142) is a portion formed on the sleeve with an essentially occlusal orientation, **characterized in that** the at least one retaining element (14; 14', 142) extends over the entire length of the sleeve (11) and in cross section has the form of a head (14'; 143, 148) with a connecting neck (14"; 144, 147), such that the connecting neck forms a retaining undercut (14"'; 145, 146) on both sides and wherein the connecting neck of the at least one retaining element is offset with respect to the apex line of the sleeve.

2. The bar matrix according to claim 1, **characterized in that** in addition, the at least one retaining element (14; 142) has a buccal or lingual inclination which differs from the occlusal direction.

3. The bar matrix according to claim 2, **characterized in that** the difference in inclination of the at least one retaining element (14; 142) from the occlusal direction is in the range 0° ° to 45°, preferably in the range 10° to 30°.

4. The bar matrix according to claim 1, **characterized in that** it has two parallel retaining elements (141, 142) which extend over the entire length of the sleeve (11), essentially having an occlusal orientation and being at an angle (α) with respect to each other.

5. The bar matrix according to claim 4, **characterized in that** the angle (α) between the two retaining elements (141, 142) is a maximum of 90°, and preferably said angle is in the range 10° to 45°.

6. The bar matrix according to claim 4, **characterized in that** in cross section, both retaining elements (141, 142) are in the form of a head (143, 148) with a connecting neck (144, 147).

7. The bar matrix according to claim 6, **characterized in that** the lengths of the connecting necks (144, 147) are different.

8. The bar matrix according to claim 1, **characterized in that** the head of the bar element has a flattened region extending over the entire length thereof.

9. The bar matrix according to claim 8, **characterized in that** the flattened region is perpendicular to the occlusal direction.

10. The bar matrix (10) according to one of claims 1 to 9, **characterized in that** the at least one retaining element (14; 141, 142) which extends over the entire length of the sleeve (11) is provided, in one or more locations, with undercut edges (16) perpendicular to the longitudinal direction of the retaining element.

## Revendications

1. Moule femelle de type croisillon (10) pour fixer une superstructure de prothèse dentaire sur un moule mâle de type croisillon (1), dans lequel le moule femelle de type croisillon comprend une douille (11) recourbée au moins approximativement en forme de U en section transversale et pouvant être appliquée au moule mâle de type croisillon, douille sur laquelle au moins un élément de retenue (14) est disposé pour maintenir la superstructure de prothèse dentaire, dans lequel ledit au moins un élément de retenue (14, 14', 14" ; 141 ; 142) est une pièce rapportée à la douille d'orientation substantiellement occlusale, **caractérisé en ce que** ledit au moins un élément de retenue (14 ; 14', 142) s'étend sur toute la longueur de la douille (11) et présente en section transversale la forme d'une tête (14' ; 143, 148) avec un col de connexion (14" ; 144, 147) de sorte que le col de connexion forme des deux côtés une contre-dépouille de retenue (14"' ; 145, 146), et dans lequel le col de connexion dudit au moins un élément de retenue est rapporté de façon décalée par rapport à la ligne de sommet de la douille.

2. Moule femelle de type croisillon selon la revendication 1, **caractérisé en ce que** ledit au moins un élément de retenue (14 ; 142) présente de plus une inclinaison buccale ou linguale différente de la direction occlusale.

3. Moule femelle de type croisillon selon la revendication 2, **caractérisé en ce que** l'inclinaison dudit au moins un élément de retenue (14 ; 142), à la différence de la direction occlusale, se situe entre 0° et 45°, de préférence entre 10° et 30°.

4. Moule femelle de type croisillon selon la revendication 1, **caractérisé en ce que** celui-ci présente deux éléments de retenue (141, 142) parallèles s'étendant sur toute la longueur de la douille (11) qui ont tous les deux une orientation substantiellement occlusale et forment ensemble un angle (α).

5. Moule femelle de type croisillon selon la revendication 4, **caractérisé en ce que** l'angle (α) formé ensemble par les deux éléments de retenue (141, 142) est au maximum de 90°, cet angle étant de préférence situé entre 10° et 45°.

6. Moule femelle de type croisillon selon la revendication 4, **caractérisé en ce que** les deux éléments de retenue (141, 142) présentent en section transversale la forme d'une tête (143, 148) avec un col de connexion (144, 147).

7. Moule femelle de type croisillon selon la revendication 6, **caractérisé en ce que** les cols de connexion (144, 147) sont de longueur différente.

8. Moule femelle de type croisillon selon la revendication 1, **caractérisé en ce que** la tête de l'élément de croisillon présente un aplatissement s'étendant sur toute la longueur.

9. Moule femelle de type croisillon selon la revendication 8, **caractérisé en ce que** l'aplatissement s'étend perpendiculairement à la direction d'occlusion.

10. Moule femelle de type croisillon (10) selon l'une quelconque des revendications 1 à 9, **caractérisé en ce que** ledit au moins un élément de retenue (14 ; 141, 142) s'étendant sur toute la longueur de la douille (11) est muni en un ou plusieurs endroits d'arêtes de contre-dépouille (16) transversalement à la direction longitudinale de l'élément de retenue.
